(19) Europäisches Patentamt / European Patent Office / Office européen des brevets

(11) **EP 4 286 487 B1**

(12) **EUROPEAN PATENT SPECIFICATION**

(45) Date of publication and mention
of the grant of the patent:
**10.06.2026  Bulletin 2026/24**

(21) Application number: **22745912.0**

(22) Date of filing: **26.01.2022**

(51) International Patent Classification (IPC):
*C09J 11/06* (2006.01)      *C09J 133/00* (2006.01)
*C09J 133/08* (2006.01)     *C09J 7/35* (2018.01)
*C09J 7/38* (2018.01)

(52) Cooperative Patent Classification (CPC):
(C-Sets available)
**C08G 18/794; C08F 220/1804; C08F 220/1808;
C08F 220/1809; C08F 220/1812; C08G 18/6225;
C08G 18/8029; C09J 133/08;** C08G 2170/20;
C08G 2170/40                                    (Cont.)

(86) International application number:
**PCT/JP2022/002867**

(87) International publication number:
**WO 2022/163693 (04.08.2022 Gazette 2022/31)**

(54) **HOT-MELT PRESSURE-SENSITIVE ADHESIVE COMPOSITION AND PRESSURE-SENSITIVE ADHESIVE SHEET**

SCHMELZHAFTKLEBSTOFFZUSAMMENSETZUNG UND HAFTKLEBEFOLIE

COMPOSITION ADHÉSIVE THERMOFUSIBLE SENSIBLE A LA PRESSION ET FEUILLE ADHÉSIVE SENSIBLE A LA PRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **01.02.2021   JP 2021014456**

(43) Date of publication of application:
**06.12.2023   Bulletin 2023/49**

(73) Proprietor: **Nitto Denko Corporation
Ibaraki-shi, Osaka 567-8680 (JP)**

(72) Inventors:
• **TAMURA, Akinori
Ibaraki-shi, Osaka 567-8680 (JP)**
• **HATANAKA, Itsuhiro
Ibaraki-shi, Osaka 567-8680 (JP)**
• **NEGISHI, Nobukazu
Ibaraki-shi, Osaka 567-8680 (JP)**

(74) Representative: **Müller-Boré & Partner
Patentanwälte PartG mbB
Friedenheimer Brücke 21
80639 München (DE)**

(56) References cited:
EP-A1- 3 388 457          JP-A- 2010 509 439
JP-A- 2018 090 802        JP-A- 2018 154 811
JP-A- 2018 154 811        JP-A- H07 173 436
JP-A- H07 173 436         JP-A- H1 036 788
JP-A- S5 657 865          JP-A- S62 149 777
JP-A- S62 149 777         US-A- 4 879 178
US-A1- 2009 272 950

(52) Cooperative Patent Classification (CPC): (Cont.)

C-Sets
**C09J 133/08, C08L 33/08;**
C08F 220/1804, C08F 220/06;
C08F 220/1808, C08F 220/06;
C08F 220/1809, C08F 220/06;
C08F 220/1812, C08F 220/06

**Description**

[Technical Field]

The present invention relates to a hot-melt pressure sensitive adhesive composition. The present invention also relates to a pressure-sensitive adhesive sheet comprising a pressure-sensitive adhesive layer formed of the hot-melt pressure-sensitive adhesive composition.

[Background Art]

In general, pressure-sensitive adhesive (PSA) exists as a soft solid (viscoelastic material) in a room temperature range and has a property to adhere easily to an adherend with pressure. With such property, PSA is widely used in various industrial fields from home electric appliances to automobiles and OA equipment as a highly reliable bonding means having a favorable workability.

PSA is typically formed into a film using a PSA composition, and is used in the form of a PSA sheet comprising the PSA film (PSA layer). In manufacturing such a PSA sheet, a PSA composition in the form of a solvent solution such as a toluene solution is generally used, and the solvent solution is applied to a suitable surface to form a PSA layer. However, in recent years, restraining of the use of solvents has been sought for preservation of the environment, and even in the formation of the PSA layer, the use of solvent-free hot-melt PSA compositions has been studied. Technical literature related to this type of hot-melt PSA include Patent Document 1. Patent Document 2 discloses a holt melt PSA composition comprising a graft acrylic polymer.

[Citation List]

[Patent Literature]

[Patent Document 1] Japanese Patent Application Publication No. 2013-147655
[Patent Document 2] US 2009/272950 A1

[Summary of Invention]

[Technical Problem]

A hot-melt PSA composition is extruded in a hot melted state from an extruder mold and molded into a film to form a PSA layer. During this, when the melted hot-melt PSA composition is excessively viscous, it will be difficult to extrude the PSA composition from the extruder mold, likely decreasing the thickness uniformity of the PSA layer (and, in turn, the PSA sheet) and resulting in poor appearance, etc. Especially, from the viewpoint of the adhesive properties, etc., when a high molecular weight polymer is used as the base polymer in the hot-melt PSA composition, the PSA tends to have a high viscosity. Thus, it is beneficial to obtain a hot-melt PSA composition that has a low viscosity in the molten state suitable for extrusion molding applications.

The present invention has been made in view of the abovementioned circumstances with an objective to provide a hot-melt PSA composition that has a low viscosity in a molten state and can favorably form a PSA layer. Other related objective of the present invention is to provide a PSA sheet obtained by using the hot-melt PSA composition.

[Solution to Problem]

This description provides a hot-melt PSA composition comprising a base polymer. The base polymer comprises an acrylic polymer A and an acrylic polymer B. Here, the acrylic polymer A is a polymer of monomers comprising, as a primary component, a (meth)acrylic monomer A having an alkyl group with 4 or more and 8 or fewer carbon atoms (or 4 to 8 carbon atoms, hereinafter). The acrylic polymer B is a polymer of monomers comprising, as a primary component, a (meth) acrylic monomer B having an alkyl group with 9 or more and 12 or fewer carbon atoms (or 9 to 12 carbon atoms, hereinafter). In the base polymer, with the total amount of the acrylic polymers A and B being 100 % by weight, the acrylic polymer B content is 10 % by weight or more and 90 % by weight or less.

Such a hot-melt PSA composition has a suitably low viscosity when melted with heat. Thus, for instance, it can be used in extrusion molding to suitably form a PSA layer.

In a preferable embodiment, the (meth)acrylic monomer A is an alkyl (meth)acrylate having an alkyl group with 4 to 8 carbon atoms at the ester terminal. In a preferable embodiment, the (meth)acrylic monomer B is an alkyl (meth) acrylate having an alkyl group with 9 to 12 carbon atoms at the ester terminal. According to the PSA composition comprising acrylic polymers A and B as polymers of monomers comprising these monomers as primary monomers, improved adhesive properties (e.g., adhesive strength and holding power) are likely to be combined with a low viscosity in the molten state.

In a preferable embodiment of the art disclosed herein, the acrylic polymer A has a weight average molecular weight (Mw) of $75 \times 10^4$ or higher and $120 \times 10^4$ or lower. In another preferable embodiment of the art disclosed herein, the acrylic polymer B has a weight average molecular weight (Mw) of $75 \times 10^4$ or higher and $120 \times 10^4$ or lower. In general, when a hot-melt PSA composition comprises a base polymer with high Mw, the PSA composition is likely to have a high viscosity when melted; and this tends to impair suitable formation of a PSA layer by molten extrusion, decrease the thickness uniformity of the resulting PSA layer, and cause poor appearance. According to this invention, the melted PSA composition has a suitably low viscosity when melted; and therefore, even when each of the acrylic polymer A and acrylic polymer B in the base polymer has Mw in the prescribed range, the suitably low viscosity of the melted PSA composition facilitates favorable formation of the PSA layer. From the viewpoint of adhesive properties, it is preferable that each of the acrylic polymer A and the acrylic polymer B has Mw at or below the abovementioned maximum value.

In a preferable embodiment of the art disclosed herein, the hot-melt PSA composition has a shear viscosity of 7000 Pa • s or less at 130 °C. With the hot-melt PSA composition with a shear viscosity of 7000 Pa • s or less at 130 °C, the viscosity in the molten state is likely to be in the range suitable for extrusion molding applications, thereby facilitating suitable formation of the PSA layer.

In a preferable embodiment of the art disclosed herein, the hot-melt PSA composition further comprises a crosslinking agent. Such a hot-melt PSA composition tends to allow formation of a PSA layer having excellent adhesive properties with suitably adjusted cohesive strength. In a preferable embodiment, the crosslinking agent is an isocyanate-based crosslinking agent.

This description provides a PSA sheet having a PSA layer formed from a PSA composition disclosed herein. Such an embodiment helps obtain a PSA sheet having favorable adhesive properties (e.g., adhesive strength and holding power) while having improved thickness uniformity and appearance. The PSA sheet in such an embodiment is likely to be free of solvents, leading to reduced burdens on the environment.

The scope of the invention for which the present patent application seeks patent protection includes a suitable combination of the respective features described above.

[Brief Description of Drawings]

Fig. 1 shows a cross-sectional diagram schematically illustrating the PSA sheet according to an embodiment.
Fig. 2 shows a cross-sectional diagram schematically illustrating the PSA sheet according to another embodiment.

[Description of Embodiments]

Preferable embodiments of the present invention are described below. Matters necessary to practice this invention other than those specifically referred to in this description can be understood by a person skilled in the art based on the disclosure about implementing the invention in this description and common technical knowledge at the time the application was filed. The present invention can be practiced based on the contents disclosed in this description and common technical knowledge in the subject field.

In the following drawings, components or units having the same functions may be described with the same symbols allocated and the redundant description may be omitted or simplified. The embodiments illustrated in the drawings are schematic in order to clearly describe the present invention and the drawings do not accurately represent the size or scale of actual products.

<PSA composition>

The PSA composition disclosed herein is a hot-melt PSA composition. Here, the "hot-melt PSA composition" refers to a PSA composition used in hot melt form (in a molten state) when forming a PSA layer. The hot-melt PSA composition is typically a solvent-free PSA composition which is essentially free of solvents. Here, the PSA composition being "solvent-free" or "essentially free of solvents" indicates that the solvent content of the whole PSA composition is 1 % by weight or less, more preferably 0.1 % by weight or less, or yet more preferably 0.01 % by weight or less, and encompasses an embodiment wherein the solvent content is 0 % by weight. In this Description, the hot-melt PSA composition may be simply referred to as "PSA composition".

(Base polymer)

The PSA composition disclosed herein includes a base polymer. The species of base polymer is not particularly limited. The PSA composition disclosed herein may be a PSA composition which comprises as the base polymer (i.e., a component accounting for 50 % by weight or more of polymer components), one, two or more species selected from various polymers showing rubber elasticity in a room temperature range, with examples including acrylic polymers, rubber polymers (natural rubber polymers, synthetic rubber polymers, and a mixture thereof), polyester polymers, urethane polymers, polyether polymers, silicone polymers, polyamide polymers, and fluorine polymers. Here, that two or more species of polymers are included as the base polymer of the PSA composition encompasses that a blend mixture of the respective polymers is included, considered as one base polymer.

The PSA composition disclosed herein can be favorably made in an embodiment where a (methacrylic monomer accounts for more than 50 % by weight of the monomer components. The PSA composition disclosed herein is preferably an acrylic PSA composition, which comprises, as the base polymer, an acrylic polymer formed from the monomer components. In the PSA composition according to some preferred embodiments, the acrylic polymer may account for more than 70 % by weight, more than 80 % by weight, or more than 90 % by weight of the polymer content of the composition. The acrylic polymer may account for 95 % by weight or more, or 98 % by weight or more of the polymer content.

As used herein, the term "acrylic polymer" refers to a polymer having (meth)acrylic monomeric units (monomeric units derived from a (meth)acrylic monomer) in the polymer structure, and typically refers to a polymer that comprises more than 50 % (meth)acrylic monomeric units by weight. As used herein, the term "(meth)acrylic monomer" refers to a monomer having at least one (meth)acryloyl group in one molecule. Here, the term "(meth)acryloyl group" collectively refers to an acryloyl group and a methacryloyl group. Therefore, the concept of (meth)acrylic monomer here may encompass both an acrylic monomer having an acryloyl group and a methacrylic monomer having a methacryloyl group. Similarly, as used herein, the term "(meth)acrylic acid" collectively refers to acrylic acid and methacrylic acid, and the term "(meth)acrylate" collectively refers to an acrylate and a methacrylate, respectively.

In a preferable embodiment of the art disclosed herein, the PSA composition comprises, as a base polymer, an acrylic polymer that is a polymer of monomers comprising a (meth)acrylic monomer as the primary component. As used herein, the "primary component" refers to a component accounting for more than 50 % of the content by weight. The amount of the primary component in the monomers is preferably 85 % by weight or greater, more preferably 90 % by weight or greater, yet more preferably 92 % by weight or greater, or particularly preferably 95 % by weight or greater.

The PSA composition disclosed herein is characterized by comprising at least two species of acrylic polymers as the base polymer. The use of a base polymer with such a composition helps achieve multiple properties in a well-balanced manner, such as improved adhesive properties and reduced viscosity in the molten state. In the art disclosed herein, the base polymer comprises at least an acrylic polymer A and an acrylic polymer B. Here, the acrylic polymer A is a polymer of monomers comprising a (meth)acrylic monomer A as the primary component. The acrylic polymer B is a polymer of monomers comprising a (meth)acrylic monomer B as the primary component. The use of a base polymer with such a composition helps combine adhesive properties (e.g., adhesive strength and holding power) with reduced viscosity in the molten state.

(Acrylic polymer A)

In the art disclosed herein, the base polymer comprises an acrylic polymer A that is a polymer of monomers comprising a (meth)acrylic monomer A having an alkyl group with 4 to 8 carbon atoms as the primary component. In a preferable embodiment of the art disclosed herein, the (meth)acrylic monomer A is an alkyl (meth)acrylate having an alkyl group with 4 to 8 carbon atoms at the ester terminal. Hereinafter, an alkyl (meth)acrylate having an alkyl group with X or more and Y or fewer number of carbon atoms may be referred to as a "$C_{X-Y}$ alkyl (meth)acrylate." When the (meth)acrylic monomer A is a $C_{4-8}$ alkyl (meth)acrylate, the structure of the $C_{4-8}$ alkyl group in the $C_{4-8}$ alkyl (meth)acrylate is not particularly limited. It is possible to use species with linear alkyl groups as well as species with branched alkyl groups. As the (meth)acrylic monomer A, solely one species or a combination of two or more species can be used among these $C_{4-8}$ alkyl (meth)acrylates. Favorable examples of the acrylic polymer A include an acrylic polymer that includes at lease one species of $C_{4-8}$ alkyl (meth)acrylate as a monomeric unit.

Examples of a $C_{4-8}$ alkyl (meth)acrylate having a linear alkyl group at the ester terminal include n-butyl (meth)acrylate, n-pentyl (meth)acrylate, n-hexyl (meth)acrylate, n-heptyl (meth)acrylate and n-octyl (meth)acrylate. Examples of a $C_{4-8}$ alkyl (meth)acrylate having a branched alkyl group at the ester terminal include t-butyl (meth)acrylate, isobutyl (meth)acrylate, isopentyl (meth)acrylate, t-pentyl (meth)acrylate, neopentyl (meth)acrylate, isohexyl (meth)acrylate, isoheptyl (meth)acrylate, 2-ethylhexyl (meth)acrylate and isooctyl (meth)acrylate. The art disclosed herein can be preferably implemented in an embodiment in which the (meth)acrylic monomer A includes one, two or more species selected among $C_{4-8}$ alkyl acrylates. Favorable examples of $C_{4-8}$ alkyl acrylates include n-butyl acrylate, 2-ethylhexyl acrylate and isooctyl acrylate. Among them, n-butyl acrylate and 2-ethylhexyl acrylate are preferable.

In the monomers forming the acrylic polymer A, the amount of (meth)acrylic monomer A is, for instance, greater than 50 % by weight, preferably 85 % by weight or greater, more preferably 90 % by weight or greater, yet more preferably 92 % by weight or greater, or particularly preferably 95 % by weight or greater.

In addition to the (meth)acrylic monomer A as the primary component, the monomers forming the acrylic polymer A may also include, as necessary, other secondary monomer(s) (comonomer(s)) copolymerizable with the (meth)acrylic monomer A. As the secondary monomer copolymerizable with the (meth)acrylic monomer A, a monomer having a functional group (e.g., carboxy group, hydroxy group, amide group, etc.) can be suitably used. The functional group-containing monomer may contribute to inclusion of crosslinking points into the acrylic polymer A and help increase the cohesive strength of acrylic polymer A and, in turn the base polymer.

As the secondary monomer, for example, the following functional group-containing monomers can be used solely or in combination of two or more.

Hydroxyl group-containing monomers: for example, hydroxyalkyl (meth)acrylates such as 2-hydroxyethyl (meth)acrylate, 2-hydroxypropyl (meth)acrylate, 3-hydroxypropyl (meth)acrylate, 4-hydroxybutyl (meth)acrylate, and (4-hydroxymethyl cyclohexyl) methyl (meth)acrylate, unsaturated alcohols such as vinyl alcohol and allyl alcohol, and ether compounds such as 2-hydroxyethyl vinyl ether, 4-hydroxybutyl vinyl ether, and diethylene glycol monovinyl ether.

Carboxyl group-containing monomers: for example, ethylene unsaturated monocarboxylic acids such as acrylic acid (AA), methacrylic acid (MAA), crotonic acid, and isocrotonic acid; and ethylene unsaturated dicarboxylic acids such as maleic acid, fumaric acid, itaconic acid, and citraconic acid.

Acid anhydride group-containing monomers: for example, maleic anhydride and itaconic anhydride.

Monomers having a nitrogen atom-containing ring: for example, N-vinyl-2-pyrrolidone, methyl-N-vinylpyrrolidone, vinylpyridine, vinylpyrazine, vinylpyrimidine, N-vinylpiperidone, N-vinylpiperazine, N-vinylpyrol, N-vinylimidazole, N-vinyloxazole, N-vinylmorpholine, N-vinyl-3-morpholinone, N-vinyl-2-caprolactam, N-vinyl-1, 3-oxazin-2-one, N-vinyl-3,5-morpholinedione, N-vinylpyrazole, N-vinylisoxazole, N-vinylthiazole, N-vinylisothiazole, N-(meth)acryloylmorpholine, N-(meth)acryloyl-2-pyrrolidone, N-(meth)acryloylpiperidine, and N-(meth)acryloylpyrrolidine.

Amido group-containing monomers: for example, (meth)acrylamides; N,N-dialkyl (meth)acrylamides such as N-N-dimethyl (meth)acrylamide, N,N-diethyl (meth)acrylamide, N-N-dipropyl (meth)acrylamide, N,N-diisopropyl (meth)acrylamide, N,N-di(n-butyl) (meth)acrylamide, and N, N-di(t-butyl) (meth)acrylamide; N-alkyl (meth)acrylamides such as N-ethyl (meth)acrylamide, N-isopropyl (meth)acrylamide, N-butyl (meth)acrylamide, and N-n-butyl (meth)actylamide; N-vinyl carboxylic acid amides such as N-vinyl acetamide; monomers having a hydroxy group and an amide group, for example, N-hydroxyalkyl (meth)acrylamides such as N-(2-hydroxyethyl) (meth)acrylamide, N-(2-hydroxypropyl) (meth)acrylamide, N-(1-hydroxypropyl) (meth)acrylamide, N-(3-hydroxypropyl) (meth)acrylamide, N-(2-hydroxybutyl) (meth)alkylamide, N-(3-hydroxybutyl) (meth)acrylamide, and N-(4-hydroxybutyl) (meth)acrylamide; monomers having an alkoxy group and an amide group, for example, N-alkoxyalkyl (meth)acrylamides such as N-methoxymethyl (meth)acrylamide, N-methoxyethyl ( meth)alkylamide, and N-butoxymethyl (meth)acrylamide; N-dialkylaminoalkyl (meth)acrylamides such as N,N-dimethylaminopropyl (meth)acrylamide.

Amino group-containing monomers: for example, aminoethyl (meth)acrylate, N,N-dimethyl aminoethyl (meth)acrylate, and t-butyl aminoethyl (meth)acrylate.

Monomers having a succinimide skeleton: for example, N-(meth)acryloyloxy methylene succinimide, N-(meth)acryloyl-6-oxy hexamethylene succinimide, and N-(meth)acryloyl-8-oxy hexamethylene succinimide.

Maleimides: for example, N-cyclohexyl maleimide, N-isopropyl maleimide, N-lauryl maleimide, and N-phenylmaleimide.

Itaconimides: for example, N-methyl itaconimide, N-ethyl itaconimide, N-butyl itaconimide, N-octyl itaconimide, N-2-ethyl hexyl itaconimide, N-cyclohexyl itaconimide, and N-lauryl itaconimide.

Epoxy group-containing monomers: for example, glycidyl (meth)acrylate, methyl glycidyl (meth)acrylate, and allyl glycidyl ether.

Cyano group-containing monomers: for example, acrylonitrile and methacrylonitrile.

Keto group-containing monomers: for example, diacetone (meth)acrylamide, diacetone (meth)acrylate, vinyl methyl ketone, vinyl ethyl ketone, allyl acetoacetate, and vinyl acetoacetate.

Alkoxysilyl group-containing monomers: for example, alkoxysilyl group-containing (meth)acrylates such as 3-(meth)acryloxypropyl trimethoxysilane, 3-(meth)acryloxypropyl triethoxysilane, 3-(meth)acryloxypropyl methyl dimethoxysilane, and 3-(meth)acryloxypropyl methyl diethoxysilane; and alkoxysilyl group-containing vinyl compounds such as vinyl trimethoxysilane, and vinyl triethoxysilane.

Monomers containing sulfonic acid group or phosphoric acid group: for example, styrene sulfonic acid, allyl sulfonic acid, sodium vinyl sulfonic acid, 2-(meth)acrylamide-2-methyl propane sulfonic acid, (meth)acrylamide propane sulfonic acid, sulfopropyl (meth)acrylate, (meth)acryloyl oxynaphthalene sulfonic acid, and 2-hydroxyethyl acryloyl phosphate.

Isocyanate group-containing monomers: for example, 2-isocyanatoethyl (meth)acrylate, (meth)acryloyl iso-

cyanate, m-isopropenyl-$\alpha$,and $\alpha$-dimethyl benzyl isocyanate.

When using such a functional group-containing monomer, the amount is not particularly limited. It is usually suitably 0.01 % by weight or more of the total amount of the monomer components forming the acrylic polymer A. From the viewpoint of obtaining greater effects of using the functional group-containing monomer, the amount of the functional group-containing monomer may be 0.1 % by weight or more, or 1 % by weight or more of the total amount of the monomer components. Of the total amount of the monomer components, the amount of the functional group-containing monomer is possibly 50 % by weight or less, preferably 15 % by weight or less, more preferably 10 % by weight or less, yet more preferably 8 % by weight or less, or particularly preferably 5 % by weight or less. This can prevent the cohesive strength of the PSA from becoming excessively high, and improve the tightness of adhesion to the adherend.

The PSA composition disclosed herein can be preferably made in an embodiment in which the monomer components forming the acrylic polymer A comprise a (meth)acrylic monomer A, and further comprises one or both of acrylic acid and a hydroxy group-containing monomer. As the hydroxy group-containing monomer, a hydroxyalkyl (meth) acrylate can be preferably used. Particularly preferable hydroxy $C_{1-4}$ alkyl acrylates include 2-hydroxyethyl acrylate (HEA), and 4-hydroxybutyl acrylate (4HBA).

The starting monomers used for preparing the acrylic polymer A may include a secondary monomer other than the abovementioned functional group-containing monomers for purposes such as enhancing the cohesive strength of acrylic polymer A.

Non-limiting specific examples of the secondary monomer include the following.

Alkoxy group-containing monomers: for example, alkoxyalkyl (meth)acrylates such as 2-methoxyethyl (meth) acrylate, 3-methoxypropyl (meth)acrylate, and 2-ethoxyethyl (meth)acrylate; alkoxy(poly)alkylene glycol (meth)acrylates such as methoxyethylene glycol (meth)acrylate, methoxypolyethylene glycol (meth)acrylate, and methoxypolypropylene glycol (meth)acrylate.

Vinyl esters: for example, vinyl acetate, and vinyl propionate.

Vinyl ethers: for example, vinyl alkyl ethers such as methyl vinyl ether, and ethyl vinyl ether.

Aromatic vinyl compounds: for example, styrene, $\alpha$-methyl styrene, and vinyl toluene.

Olefins: for example, ethylene, butadiene, and isoprene, isobutylene.

(Meth)actylic acid esters having an alicyclic hydrocarbon group: for example, alicyclic hydrocarbon group-containing (meth)acrylates such as cyclopentyl (meth)acrylate, cyclohexyl (meth)acrylate, isobornyl (meth)acrylate, dicyclopentanyl (meth)acrylate, and adamantyl (meth)acrylate.

Aromatic ring-containing (meth)acrylates: for example, aryl (meth)acrylates such as phenyl(meth)acrylate; aryloxyalkyl (meth)acrylates such as phenoxyethyl (meth)acrylate; and aryl alkyl (meth)acrylates such as benzyl (meth)acrylate.

In addition to this, heterocyclic (meth)acrylates such as tetrahydrofurfuryl (meth)acrylate; halogen atom-containing monomers such as vinyl chloride, and fluorine-containing (meth)acrylate; organosiloxane chain-containing monomers such as silicone (meth)acrylate; and (meth)acrylic acid ester obtained from terpen compound derivative alcohol, etc.

Among these other secondary monomers, solely one species or a combination of two or more species can be used. The amount of such other secondary monomers may be selected appropriately according to the purpose and application, and is not particularly limited. For example, the amount of the secondary monomer is preferably 20 % by weight or less (e.g., 2 % to 20 % by weight, typically, 3 % to 10 % by weight) of all starting monomers for the acrylic polymer A.

In a preferable embodiment of the art disclosed herein, the PSA composition comprises, as the base polymer, one, two or more species of acrylic polymers selected among acrylic polymers A. For adjusting the adhesive properties, the base polymer preferably includes two or more species of acrylic polymers selected among acrylic polymers A. For simplifying the composition, the base polymer preferably includes one species of acrylic polymer selected among acrylic polymers A.

(Acrylic polymer B)

In the art disclosed herein, in addition to the acrylic polymer A, the base polymer further includes an acrylic polymer B that is a polymer of monomers comprising an undermentioned (meth)acrylic monomer B as the primary component.

The (meth)acrylic monomer B is a (meth)acrylic monomer having an alkyl group with 9 to 12 carbon atoms. In a preferable embodiment of the art disclosed herein, the (meth)acrylic monomer B is an alkyl (meth)acrylate having an alkyl group with 9 to 12 carbon atoms at the ester terminal. When the (meth)acrylic monomer B is a $C_{9-12}$ alkyl (meth)acrylate, the structure of the $C_{9-12}$ alkyl group in the $C_{9-12}$ alkyl (meth)acrylate is not particularly limited. It is possible to use species with linear alkyl groups as well as species with branched alkyl groups. As the (meth)acrylic monomer B, solely one species or a combination of two or more species can be used among these $C_{9-12}$ alkyl (meth)acrylates.

Examples of a $C_{9-12}$ alkyl (meth)acrylate having a linear alkyl group at the ester terminal include n-nonyl (meth) acrylate, n-decyl (meth)acrylate, n-undecyl (meth)acrylate, and n-dodecyl (meth)acrylate (or lauryl (meth)acrylate).

Examples of a $C_{9-12}$ alkyl (meth)acrylate having a branched alkyl group at the ester terminal include isononyl (meth) acrylate, isodecyl (meth)acrylate, 2-propylheptyl (meth)acrylate, isoundecyl (meth)acrylate, and isododecyl (meth) acrylate. The art disclosed herein can be preferably implemented in an embodiment in which the (meth)acrylic monomer B includes one, two or more species selected among $C_{9-12}$ alkyl acrylates. Favorable examples of $C_{9-12}$ alkyl acrylates include isononyl acrylate, isodecyl acrylate, and n-dodecyl acrylate (or lauryl acrylate).

In the monomers forming the acrylic polymer B, the amount of (meth)acrylic monomer B is, for instance, greater than 50 % by weight, preferably 85 % by weight or greater, more preferably 90 % by weight or greater, yet more preferably 92 % by weight or greater, or particularly preferably 95 % by weight or greater.

In addition to the (meth)acrylic monomer B as the primary component, the monomers forming the acrylic polymer B may also include, as necessary, other secondary monomer(s) (comonomer(s)) copolymerizable with the (meth)acrylic monomer B. As the secondary monomer copolymerizable with the (meth)acrylic monomer B, a monomer having a functional group (e.g., carboxy group, hydroxy group, amide group, etc.) can be suitably used. The functional group-containing monomer may contribute to inclusion of crosslinking points into the acrylic polymer B and help increase the cohesive strength of acrylic polymer B and, in turn the base polymer.

As the secondary monomer, it is possible to use the same secondary monomers as those copolymerizable with the (meth)acrylic monomer A. Specific examples of secondary monomers that can be used as starting materials of acrylic polymer B include the same secondary monomers that can be used as starting materials of acrylic polymer A.

When an abovementioned functional group-containing monomer is used, the amount thereof is not particularly limited. In typical, it is suitably 0.01 % by weight or more of the total amount of the monomers forming the acrylic polymer B. For greater effects of using the functional group-containing monomer, the amount of functional group-containing monomer can be 0.1 % by weight or more, or even 1 % by weight or more of the total amount of monomers. Of the total amount of monomers, the amount of functional group-containing monomer is possibly 50 % by weight or less, preferably 15 % by weight or less, more preferably 10 % by weight or less, yet more preferably 8 % by weight or less, or particularly preferably 5 % by weight or less. This can prevent too high a cohesive strength of the PSA and enhance the tightness of adhesion to the adherend.

The PSA composition disclosed herein can be preferably implemented in an embodiment in which the monomers forming the acrylic polymer B includes a (meth)acrylic monomer B and further includes one or each of acrylic acid and a hydroxy group-containing monomer. As the hydroxy group-containing monomer, a hydroxyalkyl (meth)acrylate can be preferably used. Hydroxy-$C_{1-4}$-alkyl acrylates are particularly preferable, such as 2-hydroxyethyl acrylate (HEA) and 4-hydroxybutyl acrylate (4HBA).

The starting monomers used for preparing the acrylic polymer B may include a secondary monomer other than the abovementioned functional group-containing monomers for purposes such as enhancing the cohesive strength of acrylic polymer B. As these other secondary monomers, it is possible to use the same other secondary monomers used in the preparation of acrylic polymer A described above. Among these other secondary monomers, solely one species or a combination of two or more species can be used. The amount of such other secondary monomers can be suitably selected in accordance with the purpose and application and is not particularly limited. For instance, of all the starting monomers of acrylic polymer B, it is preferably 20 % by weight or less (e.g., 2 % to 20 % by weight, typically 3 % to 10 % by weight).

In a preferable embodiment of the art disclosed herein, the PSA composition comprises, as the base polymer, one, two or more species of polymers selected among acrylic polymers B. For adjusting the adhesive properties and the viscosity in the molten state, the base polymer preferably includes two or more species of acrylic polymers selected among acrylic polymers B. For simplifying the composition, the base polymer preferably includes one species of acrylic polymer selected among acrylic polymers B.

In a preferable embodiment of the art disclosed herein, the base polymer in the PSA composition is a mixture of acrylic polymer A and acrylic polymer B. In other words, in the art disclosed herein, as the base polymer of the PSA composition, it is possible to use a mixture obtained by blending one, two or more species of acrylic polymers selected among acrylic polymers A, and one, two or more species of acrylic polymers selected among acrylic polymers B. In view of simplifying the composition, in an embodiment of the art disclosed herein, the base polymer can be a mixture of two or more species of acrylic polymers selected among acrylic polymers A and one species of acrylic polymer selected among acrylic polymers B, a mixture of one species of acrylic polymer selected among acrylic polymers A and two or more species of acrylic polymers selected among acrylic polymers B, or a mixture of one species of acrylic polymer selected among acrylic polymers A and one species of acrylic polymer selected among acrylic polymers B. The acrylic polymer species can be distinguished by the species, content, arrangement, etc. of the monomer units constituting the acrylic polymer, and the polymer's weight average molecular weight, etc.

In the art disclosed herein, with the total amount of acrylic polymer A and acrylic polymer B in the base polymer being 100 % by weight, the amount of acrylic polymer B (i.e., the proportion of acrylic polymer B in the total of acrylic polymer A and acrylic polymer B) is preferably 10 % by weight or greater. The amount of acrylic polymer B is more preferably 20 % by weight or greater, or yet more preferably 30 % by weight or greater. In a preferable embodiment, the amount of acrylic polymer B can be 40 % by weight or greater, 45 % by weight or greater, or even 50 % by weight or greater.

With increasing acrylic polymer B content relative to the acrylic polymer A content, the viscosity of the PSA composition tends to favorably decrease in the hot melted state.

In the art disclosed herein, with the total amount of acrylic polymer A and acrylic polymer B in the base polymer being 100 % by weight, the amount of acrylic polymer B is preferably 90 % by weight or less, more preferably 80 % by weight or less, or yet more preferably 70 % by weight or less. In a preferable embodiment, the amount of acrylic polymer B can be 60 % by weight or less, 55 % by weight or less, or even 50 % by weight or less. With increasing acrylic polymer B content relative to the acrylic polymer A content, the adhesive properties (e.g., adhesive strength and holding power) tend to improve.

When the base polymer includes two or more species of acrylic polymers A, the amount of acrylic polymer A (acrylic polymer A content) indicates the total amount of the respective acrylic polymers A. Likewise, when the base polymer includes two or more species of acrylic polymers B, the amount of acrylic polymer (acrylic polymer B content) indicates the total amount of the respective acrylic polymers B.

(Other acrylic polymers)

In the art disclosed herein, the PSA composition may comprise other acrylic polymers as the base polymer, besides the acrylic polymer A and acrylic polymer B. Examples of the other acrylic polymers include polymers of monomers comprising a $C_{2-3}$ alkyl (meth)acrylate or a $C_{13-18}$ alkyl (meth)acrylate as the primary component. Examples of $C_{2-3}$ alkyl (meth)acrylates include ethyl (meth)acrylate, npropyl (meth)acrylate, and isopropyl (meth)acrylate. Examples of $C_{13-18}$ alkyl (meth)acrylates include n-tridecyl (meth)acrylate, n-tetradecyl (meth)acrylate, n-pentadecyl (meth)acrylate, n-hexadecyl (meth)acrylate, n-heptadecyl (meth)acrylate, n-octadecyl (meth)acrylate, isotridecyl (meth)acrylate, isomistyl (meth)acrylate, isopentadecyl (meth)acrylate, isohexadecyl (meth)acrylate, isoheptadecyl (meth)acrylate, and isostearyl (meth)acrylate. The art disclosed herein can be suitably implemented in an embodiment in which the base polymer is essentially free of other acrylic polymers besides the acrylic polymer A and acrylic polymer B.

The method for polymerizing the starting monomers is not particularly limited, and various polymerization methods known as synthetic methods for acrylic polymers such as solution polymerization, emulsion polymerization, bulk polymerization, and suspension polymerization may be adopted appropriately. For example, solution polymerization can be preferably adopted. When carrying out solution polymerization, as for the monomer supply method, it is possible to suitably employ an all-at-once supply method where all starting monomers are supplied at once, a continuous (dropwise) supply method, a portion-wise (dropwise) supply method, etc. As the solvent (polymerization solvent) used in solution polymerization, a suitable species can be selected among heretofore known organic solvents. For instance, one species of solvent or a mixture of two or more species of solvents can be used, selected among aromatic compounds (typically aromatic hydrocarbons) such as toluene; esters such as ethyl acetate and butyl acetate; aliphatic or alicyclic hydrocarbons such as hexane and cyclohexane; haloalkanes such as 1,2-dichloroethane; lower alcohols (e.g., monohydric alcohols with one to four carbon atoms) such as isopropanol; ethers such as tert-butyl methyl ether; and ketones such as methyl ethyl ketone. The polymerization temperature can be appropriately selected according to the species of monomer and solvent and the species of polymerization initiator used. For instance, it can be about 20 °C to 120 °C (typically 40 °C to 80 °C). Solution polymerization can result in a polymerization reaction mixture in which a polymer of the starting monomers is dissolved in the polymerization solvent. The PSA composition used for forming the PSA layer can be preferably manufactured, using the abovementioned polymerization reaction mixture.

In the polymerization, a known or commonly used thermal polymerization initiator or photopolymerization initiator may be used according to the polymerization method, polymerization mode, etc. Examples of the thermal polymerization initiator include an azo polymerization initiator, a peroxide initiator, a redox initiator by combination of a peroxide and a reducing agent, and a substituted ethane initiator. Examples of the photopolymerization initiator include an α-ketol photoinitiator, an acetophenone photoinitiator, a benzoin ether photoinitiator, a ketal photoinitiator, an aromatic sulfonyl chloride photoinitiator, a photoactive oxime photoinitiator, a benzophenone photoinitiator, a thioxanthone photoinitiator, and an acylphosphine oxide photoinitiator. For the polymerization initiator, solely one species or a combination of two or more species can be used.

The polymerization initiator can be used in a typical amount. For example, it can be selected in the range of about 0.005 part to 1 part by weight (typically 0.01 part to 1 part by weight) to 100 parts by weight of all starting monomers.

The PSA composition disclosed herein may further comprise, as a secondary polymer, a polymer other than the acrylic polymer as necessary. Favorable examples of the secondary polymer include non-acrylic polymers among the various polymers exemplified as polymers that may be in the PSA layer. When the PSA composition disclosed herein includes a secondary polymer in addition to the acrylic polymer, the secondary polymer content relative to 100 parts by weight of the acrylic polymer is suitably less than 100 parts by weight, preferably 50 parts by weight or less, more preferably 30 parts by weight or less, or yet more preferably 10 parts by weight or less. Relative to 100 parts by weight of the acrylic polymer, the secondary polymer content may be 5 parts by weight or less, or even 1 part by weight or less. For instance, the art disclosed herein can be preferably implemented in an embodiment where the acrylic polymer accounts for 99.5 % to 100 % by weight of the polymer content of the PSA.

The molecular weight of acrylic polymer A is not particularly limited, and may be set in an appropriate range in accordance with the required properties. A suitable species can be selected and used among species of acrylic polymer A having a weight average molecular weight (Mw) of suitably about $5 \times 10^4$ or higher, preferably about $75 \times 10^4$ or higher, more preferably about $80 \times 10^4$ or higher, and even more preferably about $85 \times 10^4$ or higher (e.g., about $90 \times 10^4$ or higher). The art disclosed herein brings about a PSA composition that shows favorably low viscosity even when melted with heat. Thus, even when an acrylic polymer A with the prescribed Mw or higher is used as the base polymer, the resulting PSA composition is likely to favorably form a PSA layer. The maximum Mw of acrylic polymer A is not particularly limited. It can be suitably about $150 \times 10^4$ or lower, preferably about $120 \times 10^4$ or lower, or more preferably about $115 \times 10^4$ or lower (e.g., about $110 \times 10^4$ or lower). When the acrylic polymer A has Mw in these ranges, the elastic modulus of the PSA can be readily adjusted in a preferable range with good cohesive strength.

The molecular weight of acrylic polymer B is not particularly limited, and may be set in an appropriate range in accordance with the required properties. A suitable species can be selected and used among species of acrylic polymer B having a weight average molecular weight (Mw) of suitably about $5 \times 10^4$ or higher, preferably about $75 \times 10^4$ or higher, more preferably about $80 \times 10^4$ or higher, and even more preferably about $85 \times 10^4$ or higher (e.g., about $90 \times 10^4$ or higher). The art disclosed herein brings about a PSA composition that shows favorably low viscosity even when heated and melted. Thus, even when an acrylic polymer B with the prescribed Mw or higher is used as the base polymer, the resulting PSA composition is likely to favorably form a PSA layer. The maximum Mw of acrylic polymer B is not particularly limited. It can be suitably about $150 \times 10^4$ or lower, preferably about $120 \times 10^4$ or lower, or more preferably about $115 \times 10^4$ or lower (e.g., about $110 \times 10^4$ or lower). When the acrylic polymer B has Mw in these ranges, the elastic modulus of the PSA can be readily adjusted in a preferable range with good cohesive strength.

The Mw of a polymer (e.g., acrylic polymer A, acrylic polymer B, etc.) here refers to a value based on standard polystyrene determined by gel permeation chromatography (GPC) analysis. As the GPC analyzer, for instance, model name HLC-8220 available from Tosoh Corporation can be used. In particular, the base polymer's Mw can be determined by the method described later in Examples.

(Glass transition temperature (Tg))

The acrylic polymer A in the PSA composition disclosed herein can be designed, for instance, to have a glass transition temperature (Tg) below 0 °C, determined based on the composition of the monomers forming the acrylic polymer A. The acrylic polymer B in the PSA composition disclosed herein can be designed, for instance, to have a glass transition temperature (Tg) below 0 °C, determined based on the composition of the monomers forming the acrylic polymer B. Here, the Tg determined based on the composition of the monomers refers to the Tg value determined by the Fox equation based on the composition of the monomer components. As shown below, the Fox equation is a relational expression between the Tg of a copolymer and glass transition temperatures Tgi of homopolymers of the respective monomers constituting the copolymer.

$$1/Tg = \Sigma(Wi/Tgi)$$

In the Fox equation, Tg represents the glass transition temperature (unit: K) of the copolymer, Wi represents the weight fraction (copolymerization ratio by weight) of a monomer i in the copolymer, and Tgi represents the glass transition temperature (unit: K) of homopolymer of the monomer i.

As for the glass transition temperatures of homopolymers used for calculating Tg, values listed in a known document are used. Specifically, values are given in "Polymer Handbook" (3rd edition, John Wiley & Sons, Inc., Year 1989). With respect to a monomer for which several values are given in Polymer Handbook, the highest value is used. For the glass transition temperatures of homopolymers whose corresponding monomers are not listed in Polymer Handbook, values obtained by the measurement method described in Japanese Patent Application Publication No. 2007-51271 can be used.

The Tg calculated based on the monomer composition can be thought as the Tg of the polymer of the monomers. The Tg of acrylic polymer A calculated in this manner is preferably -10 °C or lower, possibly -20 °C or lower, -30 °C or lower, or even -40 °C or lower. With decreasing Tg, the tightness of adhesion to the adherend tends to improve. In some embodiments, the Tg of acrylic polymer A can be -50 °C or lower, -55 °C or lower, or even -60 °C or lower. The minimum Tg of acrylic polymer A is not particularly limited. From the viewpoint of material availability and improved cohesion of the PSA layer, it is typically suitably -80 °C or higher, or preferably -70 °C or higher.

The Tg of acrylic polymer B is preferably 150 °C or lower, possibly 50 °C or lower, 30 °C or lower, or even 10 °C or lower. With decreasing Tg, the tightness of adhesion to the adherend tends to improve. In some embodiments, the Tg of acrylic polymer B can be -20 °C or lower, -35 °C or lower, or even -50 °C or lower. The minimum Tg of acrylic polymer B is not particularly limited. From the viewpoint of material availability and improved cohesion of the PSA layer, it is typically suitably -80 °C or higher, or preferably -70 °C or higher. In some embodiments, the Tg of acrylic polymer B can be -20 °C or higher, -10 °C or higher, or even 0 °C or higher.

(Viscosity)

In the art disclosed herein, the viscosity of the PSA composition is not particularly limited. The PSA composition's shear viscosity at 130 °C is preferably 7000 Pa • s or less, more preferably 6800 Pa • s or less, or yet more preferably 6700 Pa • s or less. From the viewpoint of the ease of extrusion molding of the PSA layer, the PSA composition's shear viscosity at 130 °C is typically suitably 500 Pa • s or greater, preferably 1000 Pa • s or greater (e.g., 1500 Pa • s or greater). The PSA composition's shear viscosity at 130 °C can be measured by the method described later in Examples.

It is noted that when measuring the shear viscosity of a PSA composition, it is preferable that the PSA composition used for measurement is free of a cross-linking agent. Hereinafter, a PSA composition free of a crosslinking agent is also referred to as a PSA composition PL. When the PSA composition PL has a shear viscosity in an abovementioned range at 130 °C, the PSA composition PL or that with an added crosslinking agent can be used in extrusion to suitably mold a PSA layer.

The PSA composition disclosed herein may comprise a tackifier. The tackifier is not particularly limited. Examples include rosin-based tackifiers, terpene-based tackifiers, phenol-based tackifiers, hydrocarbon-based tackifiers, ketone-based tackifiers, polyamide-based tackifiers, epoxy-based tackifiers, and elastomer-based tackifiers. For the tackifier, solely one species or a combination of two or more species can be used.

Examples of rosin-based tackifier include unmodified rosins (raw rosins) such as gum rosin, wood rosin and tall oil rosin, modified rosins (polymerized rosins, stabilized rosins, disproportionated rosins, fully hydrogenated rosins, partially hydrogenated rosins, and other chemically modified rosins) obtained by modifying unmodified rosins by polymerization, disproportionation, hydrogenation and various rosin derivatives.

Examples of the rosin derivatives include rosin-phenol-based resins obtainable by acid-catalyzed addition of phenol to rosins (unmodified rosins, modified rosins, various rosin derivatives, etc.) followed by thermal polymerization;

rosin ester-based resins such as esterified rosins (unmodified rosin esters) obtainable by esterification of unmodified rosins with alcohols and esterified modified rosins (polymerized rosin esters, stabilized rosin esters, disproportionated rosin esters, fully hydrogenated rosin esters, partially hydrogenated rosin esters, etc.) obtainable by esterification of modified rosins such as polymerized rosins, stabilized rosins, disproportionated rosins, fully hydrogenated rosins and partially hydrogenated rosins with alcohols;

unsaturated fatty acid-modified rosin-based resins obtainable by modifying unmodified rosins or modified rosins (polymerized rosins, stabilized rosins, disproportionated rosins, fully hydrogenated rosins, partially hydrogenated rosin, etc.) with unsaturated fatty acids;

unsaturated fatty acid-modified rosin ester-based resins obtainable by modifying rosin ester resins with unsaturated fatty acids;

rosin alcohol resins obtainable by reducing carboxyl groups in unmodified rosins, modified rosins (such as polymerized rosins, stabilized rosins, disproportionated rosins, fully hydrogenated rosins, partially hydrogenated rosins, etc.), unsaturated fatty acid-modified rosin-based resins or unsaturated fatty acid-modified rosin ester-based resins; and

metal salts of rosin resins (particularly rosin ester-based resins) such as unmodified rosins, modified rosins and various rosin derivatives.

Examples of terpene-based tackifiers include terpene-based resins such as α-pinene polymers, β-pinene polymers and dipentene polymers, modified terpene-based resins (terpene phenol-based resins, styrene modified terpene-based resins, aromatic modified terpene-based resins, and hydrogenated terpene-based resins, etc.) obtainable by modification (phenol modification, aromatic modification, hydrogenation, hydrocarbon modification) of terpene resins.

Examples of phenol-based tackifiers include condensation products (alkylphenol-based resins, xylene formaldehyde-based resins, etc.) between various phenols (phenol, m-cresol, 3,5-xylenol, p-alkylphenols, resorcin, etc.) and formaldehyde, resole obtainable by base-catalyzed addition of the phenols and formaldehyde, and novolac obtainable by acid-catalyzed condensation of the phenols and formaldehyde.

Examples of hydrocarbon-based tackifiers include various hydrocarbon resins such as aliphatic hydrocarbon resins, aromatic hydrocarbon resins, alicyclic hydrocarbon resins, aliphatic/aromatic petroleum resins (styrene-olefin-based copolymers, etc.), aliphatic/alicyclic petroleum resins, hydrogenated hydrocarbon resins, coumarone-based resins, and coumarone-indene-based resins.

(Crosslinking agent)

In a preferable embodiment of the art disclosed herein, the PSA composition disclosed herein further comprises a crosslinking agent. The crosslinking agent is not particularly limited and various crosslinking agents can be used. In a preferable embodiment of the art disclosed herein, possible examples of the crosslinking agent include isocyanate-based crosslinking agent, epoxy-based crosslinking agent, oxazoline-based crosslinking agent, aziridine-based crosslinking agent, carbodiimide-based crosslinking agent, melamine-based crosslinking agent, urea-based crosslinking agent, metal alkoxide-based crosslinking agent, metal chelate-based crosslinking agent, metal salt-based crosslinking agents, hydrazine-based crosslinking agent, and amine-based crosslinking agent. These can be used solely as one species or in a combination of two or more species.

As the isocyanate-based crosslinking agent, a bifunctional or higher polyfunctional isocyanate compound can be used. Examples include aromatic isocyanates such as tolylene diisocyanate, xylene diisocyanate, polymethylene polyphenyl diisocyanate, tris (p-isocyanatophenyl)thiophosphate, and diphenylmethane diisocyanate; alicyclic isocyanates such as isophorone diisocyanate; and aliphatic isocyanates such as hexamethylene diisocyanate. Commercial products include isocyanate adducts such as trimethylolpropane/tolylene diisocyanate trimer adduct (trade name CORONATE L available from Tosoh Corporation), trimethylolpropane/hexamethylene diisocyanate trimer adduct (trade name CORONATE HL available from Tosoh Corporation), and isocyanurate of hexamethylene diisocyanate (trade name CORONATE HX available from Tosoh Corporation).

As the epoxy-based crosslinking agent, a species having two or more epoxy groups per molecule can be used without particular limitations. A preferable epoxy-based crosslinking agent has 3 to 5 epoxy groups per molecule. Specific examples of the epoxy-based crosslinking agent include N,N,N',N'-tetraglycidyl-m-xylenediamine, 1,3-bis(N,N-diglycidylaminomethyl)cyclohexane, 1,6-hexanediol diglycidyl ether, polyethylene glycol diglycidyl ether, and polyglycerol polyglycidyl ether. Examples of commercial epoxy-based crosslinking agents include product names TETRAD-X and TETRAD-C available from Mitsubishi Gas Chemical Co., Inc.; product name EPICLON CR-5L available from DIC Corp.; product names DENACOL EX-512, DENACOL EX-411, and DENACOL EX-321 available from Nagase ChemteX Corporation; and product name TEPIC-G available from Nissan Chemical Industries, Ltd.

The amount of the crosslinking agent is not particularly limited, and may be set appropriately to obtain desirable effects of use. From the viewpoint of the tightness of adhesion to the adherend and reliability of bonding, the amount of the crosslinking agent used for 100 parts by weight of the base polymer is usually about 15 parts by weight or less, preferably about 12 parts by weight, and more preferably about 10 parts by weight, possibly less than 7 parts by weight, or even less than 5 parts by weight. The minimum amount of the crosslinking agent is not particularly limited. From the viewpoint of improving the adhesive properties, the amount of the crosslinking agent used for 100 parts by weight of the base polymer is usually suitably 0.01 part by weight or more, preferably 0.05 part by weight or more, more preferably 0.1 part by weight or more, yet more preferably 0.2 part by weight or more, possibly 0.5 part by weight or more, 1 part by weight or more, or even 1.5 parts by weight or more.

A crosslinking catalyst may be used to allow the reaction of an abovementioned crosslinking agent to proceed more effectively. As the crosslinking catalyst, for instance, a tin-based catalyst (particularly, dioctyltin dilaurate) or an amine-based catalyst (e.g., 1-isobutyl-2-methylimidazole) can be preferably used. The amount of the crosslinking catalyst is not particularly limited, but can be for example, approximately 0.0001 part to 1 part by weight to 100 parts by weight of the base polymer.

(Polyfunctional monomer)

A polyfunctional monomer may be used as necessary in the preparation of the PSA composition disclosed herein. The polyfunctional monomer can be used in place of or in combination with an abovementioned crosslinking agent to contribute for purposes such as adjusting the cohesive strength. Examples of the polyfunctional monomer include ethylene glycol di(meth)acrylate, propylene glycol di(meth)acrylate, polyethylene glycol di(meth)acrylate, polypropylene glycol di(meth)acrylate, neopentyl glycol di(meth)acrylate, pentaerythriotol di(meth)acrylate, pentaerythriotol tri(meth)acrylate, dipentaerythriotol hexa(meth)acrylate, ethylene glycol di(meth)acrylate, 1,6-hexanediol di(meth)acrylate, 1,12-dodecanediol di(meth)acrylate, trimethylol propane tri(meth)acrylate, tetramethylol methane tri(meth)acrylate, allyl (meth)acrylate, vinyl (meth)acrylate, divinyl benzene, epoxy acrylate, polyester acrylate, urethane acrylate, butyl diol(meth)acrylate, and hexyl diol di(meth)acrylate. Examples of particularly preferable polyfunctional monomers include trimethylol propane tri(meth)acrylate, 1,6-hexanediol di(meth)acrylate, and dipentaerythritol hexa(meth)acrylate. For the polyfunctional monomer, solely one species or a combination of two or more species can be used. The amount of the polyfunctional monomer varies depending on its molecular weight, number of functional groups, etc. It is usually suitably in the range of about 0.01 part to 3.0 parts by weight to 100 parts by weight of the base polymer. The PSA composition disclosed herein can be preferably made in an embodiment essentially free of polyfunctional monomers.

Besides the above, as far as the effect of this invention is not significantly impaired, the PSA composition in the art disclosed herein may include, as necessary, known additives that can be used in PSA, such as leveling agent, plasticizer, softener, colorant (dye, pigment, etc.), antistatic agent, anti-aging agent, UV absorber, antioxidant, photo stabilizer, and preservative.

<Formation of PSA layer>

The PSA layer in the PSA sheet disclosed herein may be formed from a hot-melt PSA composition comprising a base polymer (e.g., a mixture of acrylic polymers A and B) and comprising other optional components as necessary. The PSA composition disclosed herein can be molded in a hot melted state and then subjected to an aging process to form a PSA layer.

The method for molding the hot-melt PSA composition disclosed herein into a film (or sheet) is not particularly restricted, and a known appropriate method can be used. The PSA composition disclosed herein can be molded by methods such as calendar molding, casting, inflation extrusion and T-die extrusion. For instance, when molding the PSA composition disclosed herein into a film by melt extrusion, the PSA composition is heated to a relatively high temperature (typically about 90 °C to 110 °C, e.g., approximately 100 °C), and assumes a highly fluid molten state. Subsequently, the PSA composition in the molten state is extruded from an extruder mold and molded into a film. The resulting film of the PSA composition can be stored and aged at a lower temperature (typically about 30 °C to 50 °C, e.g., approximately 40 °C) for at least a certain period (typically, 12 hours or more, e.g., 24 hours or more) to form a PSA layer having suitable adhesive properties.

In the PSA sheet disclosed herein, the PSA layer thickness is not particularly limited, and can be appropriately selected in accordance with the purpose. In typical, the PSA layer thickness is suitably about 5 $\mu$m to 1000 $\mu$m; from the viewpoint of tight adhesion, etc., preferably about 10 $\mu$m or greater (e.g., 15 $\mu$m or greater, typically 25 $\mu$m or greater). It is preferably about 750 $\mu$m or less, more preferably 500 $\mu$m or less, or even more preferably 400 $\mu$m or less (e.g., 300 $\mu$m or less, typically 200 $\mu$m or less).

<Constitutional examples of PSA sheet>

The art disclosed herein provides a PSA sheet having the PSA layer. The PSA layer typically constitutes at least one surface of the PSA sheet. The PSA sheet may be a PSA sheet with substrate having a PSA layer on one or each face of a substrate (support) or may be a PSA sheet free of a substrate (PSA sheet without substrate).

The concept of PSA sheet here may encompass so-called PSA tape, PSA labels, PSA film, etc. The PSA sheet disclosed herein can be in a roll or in a flat sheet. Alternatively, the PSA sheet may be processed into various shapes.

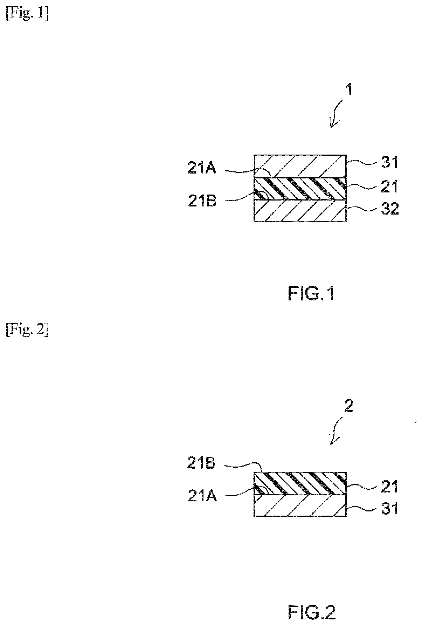

Fig. 1 and Fig. 2 show constitutional examples of preferred embodiments of the PSA sheet disclosed herein. PSA sheet 1 shown in Fig. 1 has a PSA layer 21 without substrate, with one surface (first adhesive face) 21A and the other surface (second adhesive face) 21B protected by release liners 31 and 32 with at least their PSA layer sides being release faces, respectively. PSA sheet 2 shown in Fig. 2 has a PSA layer 21 whose one surface (first adhesive face) 21A is protected by release liner 31 having release faces on both sides; when this is wound around, the other surface (second PSA face) 21B of PSA layer 21 is brought into contact with the backside of release liner 31, whereby the other surface 21B is also protected by release liner 31.

A non-peelable substrate can be attached to one adhesive face of the double-sided PSA sheet with or without substrate to use the double-sided PSA sheet as a single-sided PSA sheet with substrate.

The PSA sheet before use (before application to the adherend), as shown in Figs. 1 and 2 for instance, may be in the form of a release-linered PSA sheet whose adhesive face(s) are protected with release liner(s). The release liner is not particularly limited. For example, it is possible to use a release liner in which the surface of a liner substrate such as resin film or paper is release-treated, or a release liner formed from a low-adhesive material such as fluorine-based polymer (polytetrafluoroethylene, etc.) and polyolefin-based resin (polyethylene, polypropylene, etc.). For the release treatment, for instance, a release agent such as silicone-based and long-chain alkyl-based release agents can be used. In some embodiments, release-treated resin film can be preferably used as the release liner.

When the PSA sheet disclosed herein is in the form of a double-sided PSA sheet having first and second adhesive faces, the PSA (first PSA) constituting the first adhesive face and the PSA (second PSA) constituting the second adhesive face may have the same composition or different compositions. A double-sided PSA sheet with the first and second adhesive faces of different compositions can be realized, for example, by a PSA layer having a multi-layered structure in which two or more PSA layers having different compositions are laminated directly (not via a substrate).

<Substrate>

In an adhesively single-sided or double-sided PSA sheet with substrate, as the substrate supporting (backing) the PSA layer, various sheet substrates (sheet-shaped substrates) can be used, such as resin film, paper, cloth, rubber sheet, foam sheet, metal foil, and composites of these. The substrate may be a single layer or a laminate of the same or different substrates. As used herein, the single layer refers to a layer formed of the same composition, encompassing an embodiment with multiple laminated layers of the same composition.

In a preferred embodiment, a substrate (resin film substrate) having a resin sheet as a main component may be used. Examples of the resin constituting the substrate include polyolefin resins such as low-density polyethylene, linear low-density polyethylene, medium-density polyethylene, high-density polyethylene, ultra-low-density polyethylene, random copolymer polypropylene, block copolymer polypropylene, homopolypropylene, polybutene, polymethyl pentene, ethylene-vinyl acetate copolymer (EVA), ionomer, ethylene (meth)acrylic acid ester (random, alternating) copolymer, ethylene-butene copolymer, and ethylene-hexene copolymer; polyurethane; polyesters such as polyethylene terephthalate (PET), polyethylene naphthalate, and polybutylene terephthalate (PBT); polycarbonates; polyimides; polyether ether ketones; polyether imides; polyamides such as aramid and total aromatic polyamide; polyphenylene sulfide; fluororesins; polyvinyl chloride; polyvinylidene chloride; cellulose resins; and silicone resins. Among these resins, solely one species or a combination of two or more species can be used to form the whole or part of the substrate (e.g., any layer in a multilayer substrate with two or more layers).

To the substrate, various additives can be added as necessary, such as fillers (inorganic fillers, organic fillers, etc.), antiaging agents, antioxidants, ultraviolet absorbers, antistatic agents, lubricants, plasticizers, colorants (pigments, dyes, etc.).

The substrate can be produced by any suitable method. For instance, the substrate can be produced by a known method such as calendar molding, casting, inflation extrusion and T-die extrusion. For the production, stretching treatment can be carried out as necessary.

For purposes such as enhancing tightness of adhesion to the PSA layer and retention of the PSA layer, the PSA layer side surface of the substrate can be subjected to a known or a commonly used surface treatment, for example, a physical treatment such as corona discharge treatment, plasma treatment, sand matting, ozone exposure, flame exposure, high voltage shock treatment, and ionized radiation treatment; a chemical treatment such as acid treatment, alkali treatment, and chromic acid treatment; and easy adhesion treatment with coating agent (undercoat). For purposes such as imparting antistatic properties, the substrate surface can be provided with a conductive vapor deposition layer comprising a metal, an alloy, an oxide thereof, etc.

In some preferred embodiments, the PSA layer side surface of the substrate is provided with an undercoat layer. In other words, an undercoat layer may be disposed between the substrate and the PSA layer. The material forming the undercoat layer is not particularly limited. One, two or more species can be used among a urethane (polyisocyanate) resin, a polyester resin, an acrylic resin, a polyamide resin, a melamine resin, an olefin resin, a polystyrene resin, an epoxy resin, a phenol resin, an isocyanurate resin, a polyvinyl acetate resin, etc. When providing an acrylic or like PSA layer on a resin film substrate via an undercoat layer, a polyester-based, urethane-based, or acrylic undercoat layer is preferable. When providing an acrylic PSA layer on a polyester-based substrate such as PET film via an undercoat layer, a polyester-based undercoat layer is particularly preferable. The undercoat layer thickness is not particularly limited and may generally be in the range of about 0.1 $\mu$m to 10 $\mu$m (e.g., 0.1 $\mu$m to 3 $\mu$m, typically 0.1 $\mu$m to 1 $\mu$m). The undercoat layer may be formed using a known or conventional coater such as a gravure roll coater and reverse roll coater.

When the PSA sheet disclosed herein is a single-sided PSA sheet having a PSA layer on one side of a substrate, the PSA-layer-free side (backside) of the substrate can be subjected to a release treatment with release agent (backside treatment agent). The backside treatment agent that may be used for forming the backside treatment layer is not particularly restricted. A known or conventional treatment agent can be used according to the purpose and application, such as a silicone-based backside treatment agent, a fluorine-based backside treatment agent, a long-chain alkyl-based backside treatment agent, etc.

The substrate thickness is not particularly limited. It can be appropriately selected according to the purpose. In general, it can be about 2 $\mu$m to 800 $\mu$m. From the viewpoint of the ease of processing and handling the PSA sheet, the substrate thickness is suitably 5 $\mu$m or greater, preferably 10 $\mu$m or greater, 20 $\mu$m or greater, possibly 30 $\mu$m or greater, or even 40 $\mu$m or greater. From the viewpoint of flexibility, the substrate thickness is usually suitably 300 $\mu$m or less, preferably 200 $\mu$m or less, possibly 150 $\mu$m or less, 125 $\mu$m or less, 80 $\mu$m or less, or even 60 $\mu$m or less.

The total thickness of the PSA sheet disclosed herein (the thickness may include the PSA layer and the substrate, but excludes release liners if any) is not particularly limited. It is appropriately in the range of about 10 $\mu$m to 1200 $\mu$m. In view of tightness of adhesion and handling properties, the total PSA sheet thickness is preferably in the range of about 15 $\mu$m to 300 $\mu$m, or more preferably in the range of about 20 $\mu$m to 200 $\mu$m.

The adhesive strength of the PSA sheet disclosed herein is not particularly limited. For instance, the peel strength is typically suitably 1 N/20mm or greater, preferably 4 N/20mm or greater, yet more preferably 4.5 N/20mm or greater, or particularly preferably 5 N/20mm or greater. The peel strength is determined by peeling a 20 mm wide and 100 mm long size piece cut out of the PSA sheet from a stainless steel plate (SUS304BA plate) as an adherend at a peel angle of 180° and a tensile speed of 300 mm/min in an environment at 23 °C and 50 %RH. The maximum peel strength is not particularly limited. In view of inhibiting cohesive failure of the PSA layer, it is preferably 10 N/20mm or less. The peel strength (adhesive strength) of the PSA sheet can be determined by the method described later in Examples.

The holding power of the PSA sheet disclosed herein is not particularly limited. For instance, in a holding power test in which a 10 mm wide and 100 mm long size piece is cut from the PSA sheet and attached over a length of 20 mm to a Bakelite plate (phenolic resin plate) as an adherend to prepare a measurement sample; and a load of 500 g is applied to the free end of the measurement sample with its length direction in the vertical direction, and the resultant is left in an environment at 40 °C for 60 minutes, it is preferable that the measurement sample does not fall from the Bakelite plate. The holding power of the PSA sheet can be determined by the method described later in Examples.

[Examples]

Several working examples related to the present invention are described below, but these specific examples are not to limit the present invention. In the description below, "parts" and "%" are by weight unless otherwise specified.

(Preparation of Polymer A1)

To a reaction vessel equipped with a Liebig condenser, nitrogen inlet, thermometer, addition funnel and stirrer, was added toluene as a polymerization solvent. To this, were added 100 parts of n-butyl acrylate (BA) and 5 parts of acrylic acid (AA) as starting monomers, and 0.2 part of 2,2'-azobisisobutyronitrile (AIBN). Subsequently, the reaction mixture was purged with nitrogen at room temperature for one hour and then heated. Solution polymerization was carried out at 60 °C for 5 hours and further at 80 °C for 2 hours to prepare a Polymer A1 solution.

(Preparation of Polymer A2)

In place of the 100 parts of n-butyl acrylate (BA) as a starting material, was used 100 parts of 2-ethylhexyl acrylate (2EHA). Otherwise, in the same manner as the preparation of Polymer A1, was prepared a Polymer A2 solution.

(Preparation of Polymer B1)

In place of the 100 parts of n-butyl acrylate (BA) as a starting material, was used 100 parts of isononyl acrylate (INA). Otherwise, in the same manner as the preparation of Polymer A1, was prepared a Polymer B1 solution.

(Preparation of Polymer B2)

In place of the 100 parts of n-butyl acrylate (BA) as a starting material, was used 100 parts of lauryl acrylate (LA). Otherwise, in the same manner as the preparation of Polymer A1, was prepared a Polymer B2 solution.

The weight average molecular weights (Mw) of the resulting Polymer A1, Polymer A2, Polymer B1 and Polymer B2 were determined by the following system under the conditions shown below:

System: HCL-8220 available from Tosoh Corporation
Separation column: GMHHR-H(20) available from Tosoh Corporation
Detector: differential refraction detector
Solvent: THF
Flow rate: 0.5 mL/min
Measurement condition: column temperature at 40 °C

Table 1 shows the amounts of the materials used in the preparation of Polymer A1, Polymer A2, Polymer B1 and Polymer B2, as well as the resulting weight average molecular weights of the respective polymers determined by the above method.

[Table 1]

Table 1

| | | | Polymer A1 | Polymer A2 | Polymer B1 | Polymer B2 |
|---|---|---|---|---|---|---|
| Amount (parts) | Monomer A | BA (C4) | 100 | - | - | - |
| | | 2EHA (C8) | - | 100 | - | - |
| | Monomer B | INA (C9) | - | - | 100 | - |
| | | LA (C12) | - | - | - | 100 |
| | Other monomer | AA | 5 | 5 | 5 | 5 |
| | Polymerization initiator (AIBN) | | 0.2 | 0.2 | 0.2 | 0.2 |
| Weight average molecular weight ($\times 10^5$) | | | 7.82 | 9.69 | 9.09 | 9.19 |

<Example 1>

(Preparation of PSA composition)

Were mixed the polymer A2 solution and the polymer B1 solution at a Polymer A2 to Polymer B1 ratio of 90/10 (parts) based on solid content to prepare a PSA composition PL. To the PSA composition PL, was added 2 parts of an isocyanate-based crosslinking agent (trimethylolpropane/tolylene diisocyanate trimer adduct, available from Tosoh Corporation, product name CORONATE L, 75 % non-volatiles by weight) as a crosslinking agent. Toluene was removed by evaporation in vacuo to obtain a hot-melt PSA composition of Example 1.

<Examples 2 to 6, Comparative Examples 1 to 5>

The polymer species and their amounts were changed as shown in Tables 2 to 4. Otherwise, in the same manner as in Example 1, were obtained hot-melt PSA compositions of the respective Examples.

[Measurement of adhesive strength]

The hot-melt PSA composition prepared in each Example was heated and melted at a temperature of about 100 °C using an extruder, and extruded onto a 25 μm thick PET substrate to prepare a PSA sheet with a 50 μm thick PSA layer laminated on the PET substrate. The resulting PSA sheet was cut into a 20 mm wide and 100 mm long size to obtain a measurement sample for adhesive strength (peel strength). In an environment at 23 °C and 50 %RH, the adhesive face of the measurement sample was press-bonded to a stainless steel plate (SUS304BA plate) with a 2 kg rubber roller moved back and forth once. This was left in an environment at 50 °C for 2 hours. Subsequently, in an environment at 23 °C and 50 %RH, based on JIS Z0237:2000, using a tensile tester, the peel strength (adhesive strength) (N/20mm) was determined at a peel angle of 180° and a tensile speed of 300 mm/min. As the tensile tester, was used a triple tensile tester AG-IS available from Shimadzu Corporation. Besides this tester, an equivalent system can be used. The measurement results are shown in the corresponding columns of Tables 2 to 4.
It is noted that with respect to the PSA sheets prepared using the hot-melt PSA compositions of Comparative Examples 3 and 5, the PSA layers suffered cohesive failure in the adhesive strength measurement.

[Measurement of holding power]

The hot-melt PSA composition prepared in each Example was heated and melted at a temperature of about 100 °C using an extruder, and extruded onto a 25 μm thick PET substrate to prepare a PSA sheet with a 50 μm thick PSA layer laminated on the PET substrate. The resulting PSA sheet was cut into a 10 mm wide and 100 mm long size to obtain a measurement sample for holding power. In an environment at 23 °C and 50 %RH, the adhesive face of the measurement sample was press-bonded with a 2 kg rubber roller moved back and forth once to a Bakelite plate (phenolic resin plate) as an adherend over a bonding area of 10 mm in width and 20 mm in length. The adherend with the measurement sample thus attached was vertically suspended in an environment at 40 °C with the measurement sample's length direction oriented vertically, and allowed to stand still for 30 minutes. Subsequently, to the free end of the measurement sample, was applied a load of 500 g. Based on JIS Z0237, the resultant was left with the load applied in an environment at 40 °C for 60 minutes. After 60 minutes, the displacement distance (mm) from the initial position was measured. If the measurement sample fell from the Bakelite plate after 60 minutes, it was evaluated as "dropped". As the analyzer, was used a creep tester (Model TG83-001) available from IMADA-SS Corporation. The measurement results are shown in the corresponding columns of Tables 2 to 4.

[Measurement of shear viscosity]

The PSA composition PL prepared in each Example (but before the addition of crosslinking agent) was applied to a separator (product name MRF-38 available from Mitsubishi Chemical Corporation), allowed to dry, and peeled from the separator to obtain approximately 50 $\mu$m thick sheet pieces. Several of the resulting sheet pieces were laminated to prepare a sheet having a thickness somewhat larger than 0.5 mm. This was used as a measurement sample for shear viscosity. Using a rheometer RheoStress 6000 available from Thermo Fisher, the measurement sample was measured for shear viscosity (Pa·s) at a measurement temperature of 130 °C, a measurement speed of 0.1 (1/sec), a measurement gap of 0.5 mm, and a measurement terminal of P8 CSJ (measurement surface: Φ8 plate). The measurement results are shown in the corresponding columns of Tables 2 to 4.

[Table 2]

Table 2

|  |  | Ex. 1 | Ex. 2 | Ex. 3 | Comp. Ex. 1 | Comp. Ex. 2 |
|---|---|---|---|---|---|---|
| Amount (parts) | Polymer A1 (BA) | - | - | - | - | - |
|  | Polymer A2 (2EHA) | 90 | 50 | 10 | 95 | 5 |
|  | Polymer B1 (INA) | 10 | 50 | 90 | 5 | 95 |
|  | Polymer B2 (LA) | - | - | - | - | - |
|  | Crosslinking agent | 2 | 2 | 2 | 2 | 2 |
| Evaluations | Adhesive strength (N/20mm) | 6.41 | 6.85 | 6.17 | 6.7 | 6.3 |
|  | Holding power (mm) | 0.4 | 0.6 | 0.1 | 0.2 | Dropped |
|  | Shear viscosity (Pa•s) | 6600 | 4900 | 4400 | 7100 | 4200 |

[Table 3]

Table 3

|  |  | Ex. 4 | Ex. 5 | Comp. Ex. 3 |
|---|---|---|---|---|
| Amount (parts) | Polymer A1 (BA) | - | - | - |
|  | Polymer A2 (2EHA) | 90 | 50 | 5 |
|  | Polymer B1 (INA) | - | - | - |
|  | Polymer B2 (LA) | 10 | 50 | 95 |
|  | Crosslinking agent | 2 | 2 | 2 |
| Evaluations | Adhesive strength (N/20mm) | 5.83 | 5.01 | $\geq 10$[1] |
|  | Holding power (mm) | 0.2 | 0.2 | Dropped |
|  | Shear viscosity (Pa•s) | 4700 | 1700 | 630 |
| [1] The PSA layer suffered cohesive failure in the adhesive strength measurement of Comp. Ex. 3. | | | | |

[Table 4]

Table 4

| | | Ex. 6 | Comp. Ex. 4 | Comp. Ex. 5 |
|---|---|---|---|---|
| Amount (parts) | Polymer A1 (BA) | 90 | 95 | 5 |
| | Polymer A2 (2EHA) | - | - | - |
| | Polymer B1 (INA) | - | - | - |
| | Polymer B2 (LA) | 10 | 5 | 95 |
| | Crosslinking agent | 2 | 2 | 2 |
| Evaluations | Adhesive strength (N/20mm) | 6.27 | 7.1 | $\geq 10^{*2}$ |
| | Holding power (mm) | 0.2 | Dropped | Dropped |
| | Shear viscosity (Pa·s) | 3100 | 9400 | 720 |
| *2 The PSA layer suffered cohesive failure in adhesive strength measurement of Comp. Ex. 5. | | | | |

As evident from the results shown in Table 2, in embodiments comprising Polymer A2 and Polymer B1 as the base polymer, as for the PSA compositions of Examples 1 to 3 with 10 % or more and 90 % or less Polymer B1 content (by weight) in the base polymer, the shear viscosity was lower than the PSA composition of Comparative Example 1 with 5 % Polymer B1 content (by weight); and one or each of adhesive strength and holding power was superior to the PSA composition of Comparative Example 2 with 95 % Polymer B1 content (by weight).

The results shown in Table 3 and Table 4 also showed the same tendency. That is, in embodiments comprising Polymer A2 and Polymer B2 as the base polymer, as for the PSA compositions of Examples 4 and 5 with 10 % or 50 % Polymer B2 content (by weight) in the base polymer, the adhesive properties (adhesive strength and/or holding power) were superior to the PSA composition of Comparative Example 3 with 95 % Polymer B2 content (by weight). In embodiments comprising Polymer A1 and Polymer B2 as the base polymer, as for the PSA composition of Example 6 with 10 % Polymer B2 content (by weight) in the base polymer, the shear viscosity was lower than the PSA composition of Comparative Example 4 with 5 % Polymer B2 content (by weight); and the adhesive properties (adhesive strength and/or holding power) were superior to the PSA composition of Comparative Example 5 with 5 % Polymer A1 content (by weight). The PSA compositions of Examples 1 to 6 all had shear viscosities within the suitable range for use in extrusion molding. On the other hand, with the PSA compositions of Comparative Examples 3 and 5, the PSA layers suffered cohesive failure in the adhesive strength measurement.

Although specific embodiments of the present invention have been described in detail above, these are merely for illustrations and do not limit the scope of claims. The art according to the claims includes various modifications and changes made to the specific embodiments illustrated above.

[Reference Signs List]

1, 2 PSA sheets
21 PSA layer
21A first adhesive face
21B second adhesive face
31, 32 release liners

Claims

1. A hot-melt pressure-sensitive adhesive composition comprising a base polymer, with the base polymer comprising an acrylic polymer A and an acrylic polymer B, wherein

the acrylic polymer A is a polymer of monomers comprising, as a primary component, a (meth)acrylic monomer A having an alkyl group with 4 or more and 8 or fewer carbon atoms;
the acrylic polymer B is a polymer of monomers comprising, as a primary component, a (meth)acrylic monomer B having an alkyl group with 9 or more and 12 or fewer carbon atoms; and
in the base polymer, with the total amount of the acrylic polymer A and the acrylic polymer B being 100 % by weight, the acrylic polymer B content is 10 % by weight or more and 90 % by weight or less.

2. The hot-melt pressure-sensitive adhesive composition according to Claim 1, wherein

the acrylic polymer A has a weight average molecular weight of $75 \times 10^4$ or higher and $120 \times 10^4$ or lower, and the acrylic polymer B has a weight average molecular weight of $75 \times 10^4$ or higher and $120 \times 10^4$ or lower, wherein the weight average molecular weight is determined by the method disclosed in the description.

3. The hot-melt pressure-sensitive adhesive composition according to Claim 1 or 2, having a shear viscosity as determined by the method disclosed in the description of 7000 Pa • s or less at 130 °C.

4. The hot-melt pressure-sensitive adhesive composition according to any one of Claims 1 to 3, further comprising a crosslinking agent.

5. The hot-melt pressure-sensitive adhesive composition according to Claim 4, wherein the crosslinking agent is an isocyanate-based crosslinking agent.

6. A pressure-sensitive adhesive sheet having a pressure-sensitive adhesive layer formed from the hot-melt pressure-sensitive adhesive composition according to any one of Claims 1 to 5.

**Patentansprüche**

1. Heißschmelzende druckempfindliche Klebstoffzusammensetzung, umfassend ein Basispolymer, wobei das Basispolymer ein Acrylpolymer A und ein Acrylpolymer B umfasst, wobei

das Acrylpolymer A ein Polymer aus Monomeren ist, die als einen Hauptbestandteil ein (Meth)acrylmonomer A mit einer Alkylgruppe mit 4 oder mehr und 8 oder weniger Kohlenstoffatomen umfassen;
das Acrylpolymer B ein Polymer aus Monomeren ist, die als einen Hauptbestandteil ein (Meth)acrylmonomer B mit einer Alkylgruppe mit 9 oder mehr und 12 oder weniger Kohlenstoffatomen umfassen; und
im Basispolymer, bei einer Gesamtmenge von Acrylpolymer A und Acrylpolymer B von 100 Gew.-%, der Gehalt an Acrylpolymer B 10 Gew.-% oder mehr und 90 Gew.-% oder weniger beträgt.

2. Heißschmelzende druckempfindliche Klebstoffzusammensetzung nach Anspruch 1, wobei

das Acrylpolymer A ein gewichtsgemitteltes Molekulargewicht von $75 \times 10^4$ oder mehr und $120 \times 10^4$ oder weniger aufweist und
das Acrylpolymer B ein gewichtsgemitteltes Molekulargewicht von $75 \times 10^4$ oder mehr und $120 \times 10^4$ oder weniger aufweist, wobei das gewichtsgemittelte Molekulargewicht nach dem in der Beschreibung offenbarten Verfahren bestimmt wird.

3. Heißschmelzende druckempfindliche Klebstoffzusammensetzung nach Anspruch 1 oder 2, die eine Scherviskosität von 7000 Pa·s oder weniger bei 130 °C aufweist, bestimmt nach dem in der Beschreibung offenbarten Verfahren.

4. Heißschmelzende Haftklebstoffzusammensetzung nach einem der Ansprüche 1 bis 3, weiter umfassend ein Vernetzungsmittel.

5. Heißschmelzende druckempfindliche Klebstoffzusammensetzung nach Anspruch 4, wobei das Vernetzungsmittel ein Vernetzungsmittel auf Isocyanatbasis ist.

6. Druckempfindliche Haftfolie mit einer druckempfindlichen Klebeschicht, die aus der heißschmelzenden druckempfindlichen Klebstoffzusammensetzung nach einem der Ansprüche 1 bis 5 gebildet ist.

**Revendications**

1. Composition d'adhésif thermofusible sensible à la pression comprenant un polymère de base, avec le polymère de base comprenant un polymère acrylique A et un polymère acrylique B, dans laquelle

le polymère acrylique A est un polymère de monomères comprenant, en tant que composant primaire, un monomère (méth)acrylique A ayant un groupe alkyle avec 4 ou plus et 8 ou moins atomes de carbone ;
le polymère acrylique B est un polymère de monomères comprenant, en tant que composant primaire, un monomère (méth)acrylique B ayant un groupe alkyle avec 9 ou plus et 12 ou moins atomes de carbone ; et
dans le polymère de base, avec la quantité totale du polymère acrylique A et du polymère acrylique B qui est de 100 % en poids, la teneur en polymère acrylique B est de 10 % en poids ou plus et 90 % en poids ou moins.

2. Composition d'adhésif thermofusible sensible à la pression selon la revendication 1, dans laquelle

le polymère acrylique A a un poids moléculaire moyen en poids de 75 x 10$^4$ ou supérieur et 120 x 10$^4$ ou inférieur, et
le polymère acrylique B a un poids moléculaire moyen en poids de 75 x 10$^4$ ou supérieur et 120 x 10$^4$ ou inférieur, dans laquelle le poids moléculaire moyen en poids est déterminé par le procédé divulgué dans la description.

3. Composition d'adhésif thermofusible sensible à la pression selon la revendication 1 ou 2, ayant une viscosité de cisaillement telle que déterminée par le procédé divulgué dans la description de 7000 Pa·s ou moins à 130 °C.

4. Composition d'adhésif thermofusible sensible à la pression selon l'une quelconque des revendications 1 à 3, comprenant en outre un agent de réticulation.

5. Composition d'adhésif thermofusible sensible à la pression selon la revendication 4, dans laquelle l'agent de réticulation est un agent de réticulation à base d'isocyanate.

6. Feuille adhésive sensible à la pression ayant une couche d'adhésif sensible à la pression formée à partir de la composition d'adhésif thermofusible sensible à la pression selon l'une quelconque des revendications 1 à 5.

[Fig. 1]

1

21A — 31
21 — 21
21B — 32

FIG.1

[Fig. 2]

2

21B — 21
21A — 31

FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013147655 A
- US 2009272950 A1

- JP 2007051271 A

**Non-patent literature cited in the description**

- Polymer Handbook. John Wiley & Sons, Inc., 1989